# FASCICULE DE BREVET EUROPEEN

(11) **EP 2 214 897 B1**
(45) Date de publication et mention de la délivrance du brevet: **07.09.2011**
(21) Numéro de dépôt: 08843826.2
(22) Date de dépôt: 17.10.2008
(51) Int. Cl.: B29D 30/16, B29D 30/30, B60C 19/08

(54) **METHODE DE FABRICATION D'UN PNEUMATIQUE COMPRENANT UN INSERT CONDUCTEUR DE L'ELECTRICITE PAR ENROULEMENT DE BANDELETTES**
VERFAHREN ZUR HERSTELLUNG EINES REIFENS MIT EINEM ELEKTRISCH LEITENDEN EINSATZ DURCH WICKELN VON STREIFEN
METHOD OF MANUFACTURING A TYRE COMPRISING AN ELECTRICALLY CONDUCTIVE INSERT BY WINDING OF STRIPS

(30) Priorité: 30.10.2007 FR 0758695
(43) Date de publication de la demande: 11.08.2010
(73) Titulaire: Société de Technologie MICHELIN, 63000 Clermont-Ferrand (FR); MICHELIN Recherche et Technique S.A., 1763 Granges-Paccot (CH)
(72) Inventeur: CAPPA, Bernard, F-63370 Lempdes (FR); CHEVAUX, Nicolas, Chaynat F-63320 Ludesse (FR)
(74) Mandataire: Reynaud, Georges
(86) Numéro de dépôt international: PCT/EP2008/064049
(87) Numéro de publication internationale: WO 2009/056458

(56) Documents cités:
- EP-A- 1 175 992
- EP-A- 1 657 050
- EP-A- 1 738 893
- US-A1- 2004 069 386

## Description

L'invention concerne le domaine de la fabrication des pneumatiques. Plus particulièrement la présente invention s'intéresse au problème connu de l'écoulement des charges électrostatiques au travers d'un pneumatique possédant plusieurs mélanges comprenant à titre de charge majoritaire une charge non-conductrice telle que la silice ou des mélanges faiblement chargés en noir de carbone, au moins deux de ces mélanges constituant la bande de roulement.

Ce problème ainsi que les solutions qui y ont été apportées, est divulgué à titre d'exemple dans la publication EP 658 452, dans laquelle est décrit un pneumatique dont la bande de roulement est formée d'un mélange à base de silice. Selon cette publication, une bande de caoutchouc conducteur s'étend sur toute la circonférence du pneumatique et relie la surface extérieure de la bande de roulement aux nappes sommet dont la conductivité électrique est obtenue par la présence de noir de carbone dans la matrice en élastomère.

La publication EP1 103 391 décrit le cas d'un pneumatique comportant plusieurs couches de mélanges caoutchouteux non conducteurs de l'électricité et situés au-dessus de l'armature de carcasse, comme cela se rencontre fréquemment dans les pneumatiques susceptibles de rouler avec une température de fonctionnement stabilisée élevée, tels que les pneumatiques équipant les véhicules lourds ou les véhicules rapides. Selon cette publication, chacune des couches non conductrice de la bande de roulement est traversée par un insert circonférentiel qui est introduit pendant l'opération de co-extrusion à l'aide d'une buse placée dans le flux d'écoulement des matériaux formant la bande de roulement. Cet insert est formé d'un matériau conducteur de l'électricité, de sorte que les charges électrostatiques s'écoulent depuis la surface de la bande de roulement, qui est en contact avec le sol, jusqu'à la ceinture de renfort qui est enrobée dans un mélange également conducteur de l'électricité.

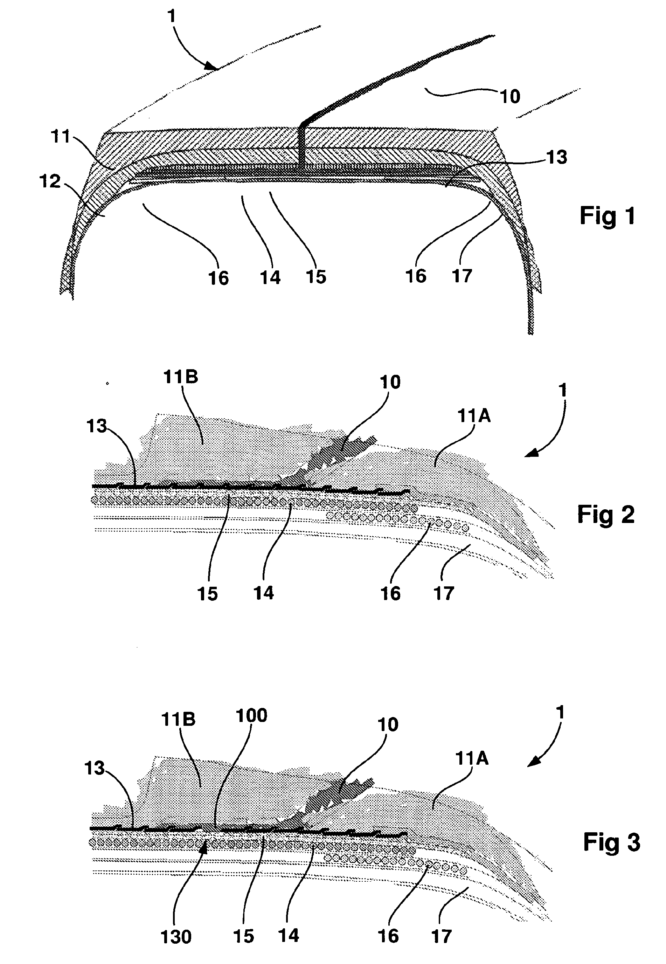

La figure 1 représente une vue schématique en coupe d'un pneumatique tel que décrit dans la publication EP 1 103 391 et comportant une bande de roulement externe une bande de roulement interne, que l'on dénommera ensemble sous l'appellation générique de bande de roulement, et une sous-couche. Ces produits profilés sont disposés radialement au dessus de la ceinture de renfort sommet (14, 15, 16). En règle générale, la sous-couche dont la fonction est de favoriser la liaison entre les mélanges formant la bande de roulement et la nappe formant la ceinture de renforcement du sommet, est un produit plat de faible épaisseur et de faible volume en regard de l'épaisseur et du volume de la masse de gomme formant la bande de roulement. La bande de roulement (intérieure 12 et extérieure 11) est réalisée à partir d'un mélange caoutchouteux faiblement conducteur de l'électricité. Un insert circonférentiel 10 traverse la bande de roulement de manière à relier électriquement la surface extérieure de la bande de roulement et la nappe de renfort sommet.

On entend par matériau faiblement conducteur de l'électricité un matériau présentant une résistivité supérieure ou égale à 10⁸ Ohms/cm. Ces matériaux ont les propriétés élastiques appropriées à la fonction qui leur est assignée dans le pneumatique et sont en règle générale formés à partir d'un mélange caoutchoutique renforcé par des charges à base de silice.

De même, on entend par matériau conducteur de l'électricité un matériau présentant une résistivité inférieure à 10⁶ Ohms/cm. Ces matériaux sont en règle générale formés à partir d'un mélange caoutchoutique renforcé par des charges de carbone.

Lorsque la sous-couche 13, est formée d'un matériau caoutchoutique conducteur de l'électricité il n'est pas nécessaire de prolonger radialement l'insert 10 pour atteindre les nappes de renfort de la ceinture sommet. Dans le cas contraire, où la sous couche 13 est elle-même formée d'un matériau caoutchoutique non conducteur de l'électricité, il est alors nécessaire de faire passer l'insert radialement au travers de la sous couche.

La publication EP 1 175 992 décrit une méthode de fabrication d'un pneumatique par enroulement sur une forme rotative de bandelettes jointives, selon un pas et un nombre de tours adapté au profil désiré, comprenant les étapes suivantes dans lesquelles on dépose:
- une bandelette destinée à former la sous-couche sur les nappes formant la ceinture de renfort sommet, ladite bandelette étant réalisée à partir d'un matériau caoutchoutique faiblement conducteur de l'électricité;
- une ou plusieurs bandelettes destinées à former la première partie de la bande de roulement, placées axialement d'un coté de l'ébauche de pneumatique, la ou lesdites bandelettes étant réalisées à partir de matériaux caoutchoutiques faiblement conducteurs de l'électricité;
- une bandelette destinée à former l'insert disposée de telle sorte que, au moins une spire radialement intérieure soit en contact avec la sous-couche, ladite bandelette étant réalisée à partir d'un matériau caoutchoutique conducteur de l'électricité.

La présente invention s'intéresse plus particulièrement aux pneumatiques qui sont réalisés par enroulement d'une bandelette de gomme autour d'une forme rotative cylindrique ou torique.

Cette méthode de fabrication permet de réaliser des architectures complexes par enroulement successif de spires jointives ou non, selon un pas donné dans la direction transversale, parallèle à l'axe de rotation du pneumatique, et selon un nombre de tours donné, de manière à obtenir le profil transversal désiré. Une vue en coupe d'une architecture sommet réalisée selon ce principe de fabrication est illustrée à la figure 2.

On observera que la formation de la bande de roulement se décompose en plusieurs opérations distinctes, consistant successivement à :
- déposer par enroulement sur plusieurs tours d'une bandelette continue formant la sous-couche 13 sur la nappe 15 formant la ceinture de renfort sommet ; en règle générale une seule épaisseur de bandelette suffit, ce qui autorise la pose de spires jointives ou très faiblement superposées,
- déposer par enroulement sur plusieurs tours une ou plusieurs bandelettes destinées à former la première partie de la bande de roulement (11A) et placées axialement d'un coté de l'ébauche de pneumatique ; la ou lesdites bandelettes étant réalisées à partir de matériaux caoutchoutiques faiblement conducteurs de l'électricité, de manière à constituer une première partie latérale 11A de la bande de roulement,
- déposer par enroulement sur plusieurs tours une bandelette destinée à former l'insert (10), disposée de telle sorte que au moins une spire (100) radialement intérieure soit en contact avec la sous-couche (10), ladite bandelette étant réalisée à partir d'un matériau caoutchoutique conducteur de l'électricité,
- déposer par enroulement sur plusieurs tours d'une ou plusieurs bandelettes formant la deuxième partie 11 B de la bande de roulement ; cette deuxième partie est située axialement de l'autre coté de l'insert.

Lorsque la sous-couche est elle-même formée à partir d'un matériau non conducteur de l'électricité, ce qui s'avère être de plus en plus souvent le cas compte tenu des choix technologiques réalisés en vue de réduire les forces s'opposant à l'avancement du pneumatique, il est nécessaire de poser la sous-couche en deux parties 13 A et 13 B (non visualisées) de manière à intercaler une bande de mélange de l'insert dans le but de réaliser la continuité électrique à travers la sous-couche.

Chacune de ces opérations distinctes se décomposent elles-mêmes en séquences élémentaires où il convient : de sélectionner et d'approcher l'outil de dépose de la bandelette, de mettre en rotation la surface de réception, de déposer la bandelette en faisant le nombre de tours désiré, puis d'interrompre la pose en arrêtant la rotation de la surface de réception, et enfin d'éloigner l'outil de dépose.

La multiplication du nombre de dépose de produit différents augmente d'autant le nombre de séquences élémentaires et pénalise le rendement de la machine d'assemblage dans son ensemble.

L'objet de l'invention est d'apporter une solution intéressante au problème de la pose de l'insert par enroulement lorsque la sous-couche est formée d'un matériau non conducteur de l'électricité.

Selon l'invention, comme définie dans la revendication 1, la dépose de la sous-couche peut se faire sans interruption du cycle de l'outil de dépose de la bandelette, en faisant en sorte que les spires situées axialement au droit de la partie radialement intérieure des spires formant l'insert ne soient pas jointives. Cette méthode se caractérise en ce que on crée localement un écart de pas de la bandelette formant la sous-couche. Cet écart de pas est placé axialement au droit de la partie radialement intérieure de l'insert, de sorte à rendre les spires non jointive à cette endroit précis.

Lors de l'opération de vulcanisation le mélange de l'insert pénètre dans l'espace laissé libre entre les deux spires non jointives de la sous-couche, et vient au contact de la nappe de renfort sommet. Un chemin électriquement conducteur est donc établi entre la partie de l'insert radialement externe qui est en contact avec le sol et la nappe de renfort sommet, de telle sorte que les charges électrostatiques puissent s'écouler librement en passant par le pneumatique monté sur sa jante, ladite jante étant elle-même montée sur le véhicule.

La méthode selon l'invention permet ainsi de réduire le nombre de séquences élémentaires pour réaliser une bande de roulement et une sous-couche formées de matériaux faiblement conducteurs de l'électricité et traversés par un insert réalisé avec un matériau caoutchoutique conducteur de l'électricité. En effet, la réalisation de la sous-couche peut se faire en enroulant la bandelette en continu en une seule étape, sans qu'il soit nécessaire d'interrompre le processus pour disposer un insert. Des formes avantageuses de l'invention font l'objet des revendications dépendantes.

La description qui suit, permet d'illustrer un mode particulier de mise en oeuvre de l'invention et s'appuie sur les figures 1 à 5 dans lesquelles :
- la figure 1 représente une coupe transversale d'un pneumatique comportant une sous-couche et un insert,
- la figure 2 représente une coupe transversale d'une ébauche de pneumatique réalisé par enroulement de bandelettes et comportant une sous-couche conductrice des charges électriques,
- la figure 3 représente une coupe transversale d'un pneumatique réalisé selon une méthode conforme à l'invention,
- les figures 4 et 5 représentent des vues schématiques en perspectives de l'écorché d'une ébauche de pneumatique réalisé selon une méthode conforme à l'invention.
- Les figures 6, 7 et 8 illustrent des formes de réalisation possibles d'un écart de pas selon l'invention.

La figure 1 représente la coupe transversale d'un pneumatique 1 comprenant une nappe de renfort carcasse 17, surmontée d'un ensemble de nappes constituant la nappe de renfort sommet, 14, 15, 16, sur laquelle a été posée une sous-couche 13, une bande de roulement intérieure, 12, et une bande de roulement extérieure, 11.

Ce pneumatique a été réalisé selon une méthode connue, telle que celle décrite dans le brevet 1 103 391 cité ci-dessus. Selon ce procédé, les différents profilés de gomme sont réalisés sur des outils d'extrusion délivrant une bande de matériau caoutchoutique composite ayant le profil final désiré. La bande continue est, selon un procédé également connu, découpée en tronçons de longueur donnée, lesquels tronçons sont enroulés autour d'une forme rotative sur laquelle ont été préalablement disposées les nappes de renfort sommet.

La figure 2 représente la coupe transversale d'une ébauche d'un pneumatique réalisée selon le procédé connu d'enroulement de bandelettes. Les bandelettes sont enroulées en spires généralement jointives autour d'une forme rotative (non représentée) selon un pas et un nombre de tours donné de manière à reconstituer la forme du profil transversal désirée. A cet effet on combine de manière adaptée la vitesse de déplacement transversal du moyen apte à délivrer la bandelette et la vitesse de rotation de la forme rotative.

La forme rotative peut indistinctement être de forme cylindrique ou toroïdale. La nappe de renfort carcasse 17 est coiffée par les nappes de renfort 14, 15 16 qui constituent les nappes de ceinture du sommet. Ces nappes, ainsi que la nappe de renfort carcasse 17, sont formées de renforts métalliques enrobés dans des mélanges caouthoutiques conducteurs de l'électricité. La nappe de renfort carcasse 17 relie la zone sommet avec la zone basse du pneumatique.

La sous-couche 13, recouvre la dernière nappe de renfort sommet 15, située radialement à l'extérieur. Cette sous-couche, de faible épaisseur, est formée par la juxtaposition de spires jointives bord à bord ou très faiblement superposées. Dans le cas de la figure 2, la sous-couche est réalisée à l'aide d'un matériau conducteur de l'électricité.

Aussi, il suffit que les spires de l'insert 10 soient au contact de la sous-couche pour établir un chemin électrique entre la partie externe de l'insert, au contact du sol, et la partie interne de la sous-couche. Les dites charges électriques s'écoulent par la sous-couche au travers de la ceinture sommet, de la nappe de renfort carcasse, et de la zone basse jusqu'à la jante.

La figure 3 permet de visualiser une coupe transversale d'une ébauche de pneumatique 1 réalisée selon une méthode conforme à l'invention, et dans laquelle la sous-couche est formée d'un matériau caouchoutique faiblement conducteur de l'électricité. La sous-couche est enroulée directement sur la surface de la nappe de renfort sommet 15.

Un écart de pas 130 a été opéré lors de l'enroulement des spires formant la sous-couche 13. Cet écart de pas est placé axialement au droit de l'insert 10, de sorte que, au moins une des spires de l'insert 100 est en contact avec la nappe de renfort sommet 15 par l'intermédiaire de cette ouverture 130 pratiquée entre les deux spires de la sous-couche. Ainsi, la pose de la bandelette formant la sous-couche n'est pas interrompue dans le but de placer une bandelette destinée à former la base de l'insert au contact des la nappe de renfort sommet 15.

On peut provoquer également un écart brutal ce qui provoque un décrochement localisé de l'enroulement comme cela est illustré à la figure

La valeur de l'écart de pas peut utilement être au moins supérieur à la moitié de la largeur de la bandelette et inférieure à la largeur de ladite bandelette. A titre d'exemple un écart de pas de 40 mm pour une bandelette de 20 mm a donné de bons résultats.

Les essais de roulage ont montrés que l'absence localisée de la-sous-couche entre la nappe de renfort carcasse et l'insert n'était pas préjudiciable à la performance du pneumatique pour autant que le m"lange formant l'insert soit compatible avec le mélange formant de la nappe de renfort.

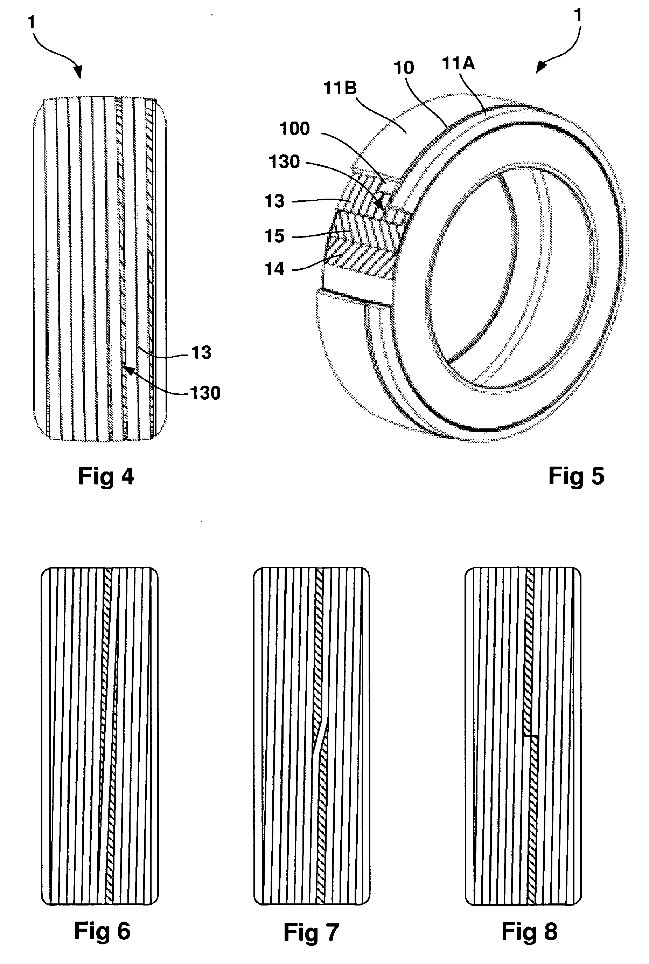

La figure 4 illustre de manière schématique l'ébauche de pneumatique après la pose de la sous-couche. L'écart de pas 130 apparaît entre les deux spires placées radialement au droit de l'insert.

La figure 5, représente un écorché de permet également de visualiser l'empilement des couches de bandelettes constituants les différents profilés de l'ébauche de pneumatique.

L'écart de pas peut se faire de différentes façons en faisant varier de manière plus ou moins rapide la vitesse de déplacement transversale du moyen délivrant la bandelette.

Selon un premier mode de réalisation on s'arrange pour doubler voire tripler pendant une rotation de la forme rotative la vitesse de déplacement transversal. On obtient alors un écart régulier comme cela est illustré à la figure 6.

On peut aussi faire un déplacement transversal très rapide comme illustré à la figure 7.

Lorsque le moyen délivrant la bandelette sur la forme rotative est formé par un ensemble comprenant une buse d'extrusion appliquant le mélange directement sur la surface de pose, tel que décrit à titre indicatif dans la demande non publiée N° FR 07/03434, on peut interrompre aisément le flux matière sortant de la buse pendant un tour complet, tout en laissant inchangée la vitesse de déplacement transversal du moyen délivrant la bandelette sur la forme rotative, pour obtenir un écart de pas tel qu'illustré à la figure 8.

## Revendications

1. Méthode de fabrication d'un pneumatique (1) par enroulement sur une forme rotative de bandelettes jointives, selon un pas et un nombre de tours adapté au profil désiré, comprenant les étapes suivantes dans lesquelles on dépose,
- une bandelette destinée à former la sous-couche (13) sur les nappes (15) formant la ceinture de renfort sommet, ladite bandelette étant réalisée à partir d'un matériau caoutchoutique faiblement conducteur de l'électricité,
- une ou plusieurs bandelettes destinées à former la première partie de la bande de roulement (11A), placées axialement d'un coté de l'ébauche de pneumatique, la ou lesdites bandelettes étant réalisées à partir de matériaux caoutchoutiques faiblement conducteurs de l'électricité
- une bandelette destinée à former l'insert (10) disposée de telle sorte que, au moins une spire (100) radialement intérieure soit en contact avec la sous-couche (10), ladite bandelette étant réalisée à partir d'un matériau caoutchoutique conducteur de l'électricité
**caractérisé en ce que** on crée localement un écart de pas (130) lors de l'enroulement de la bandelette formant la sous-couche (13), ledit écart de pas étant disposé axialement au droit de la partie radialement intérieure de l'insert (10), de sorte à rendre les spires non jointives.

2. Méthode de fabrication selon la revendication 1 dans laquelle on réalise l'étape supplémentaire consistant à déposer une ou plusieurs bandelettes destinées à former la deuxième partie de la bande de roulement (11B), placées axialement de l'autre coté de l'insert (10), la ou lesdites bandelettes étant réalisées à partir de matériaux caoutchoutiques faiblement conducteurs de l'électricité.

3. Méthode de fabrication selon l'une des revendications 1 ou 2 dans laquelle, la distance entre les bords de deux spires consécutives formant la sous-couche (13) au niveau de l'écart de pas (130) est localement supérieure à la demi largeur de ladite bandelette.

4. Méthode de fabrication selon l'une des revendications 1 à 3 dans laquelle, la distance entre les bords de deux spires consécutives formant la sous-couche (13) au niveau de l'écart de pas (130) est localement inférieure ou égale à la largeur de ladite bandelette.

## Claims

1. Method of manufacturing a tyre (1) by winding contiguous strips onto a rotary form at a pitch and in a number of turns that is suited to the desired profile, comprising the following steps that involve laying:
- a strip that is intended to form the sublayer (13) onto the plies (15) that form the crown reinforcement belt, the said strip being made of a rubbery material that is a poor conductor of electricity,
- one or more strips that are intended to form the first part of the tread (11A), these being positioned axially on one side of the green tyre, the strip or strips being made of rubbery materials that are poor conductors of electricity,
- a strip that is intended to form the insert (10) and that is laid in such a way that at least one radially interior turn (100) is in contact with the sublayer (10), the said strip being made of a rubbery material that is a conductor of electricity,
**characterized in that** a pitch offset (130) is created locally when the strip that forms the sublayer (13) is being wound, the said pitch offset being positioned axially in line with the radially interior part of the insert (10), so as to make the turns non-contiguous.

2. Method of manufacture according to Claim 1, in which an additional step is carried out, this additional step consisting in laying one or more strips that are intended to form the second part of the tread (11B) and that are positioned axially on the other side of the insert (10), the said strip or strips being made of rubbery materials that are poor conductors of electricity.

3. Method of manufacture according to one of Claims 1 and 2, in which the distance between the edges of two consecutive turns that form the sublayer (13) at the pitch offset (130) is locally greater than half the width of the said strip.

4. Method of manufacture according to one of Claims 1 to 3, in which the distance between the edges of two consecutive turns that form the sublayer (13) at the pitch offset (130) is locally less than or equal to the width of the said strip.

## Patentansprüche

1. Verfahren für die Herstellung eines Luftreifens (1) durch Wickeln aneinander stoßender Bänder auf eine rotierende Form mit einer Steigung und einer Windungsanzahl, die an das gewünschte Profil angepasst sind, das die Schritte umfasst, in denen angeordnet werden:
- ein Band, das dazu bestimmt ist, die Unterlage (13) auf den Kordlagen (15) zu bilden, die den Oberseiten-Verstärkungsgürtel bilden, wobei das Band aus einem elektrisch schwach leitenden Kautschukmaterial hergestellt ist,
- ein oder mehrere Bänder, die dazu bestimmt sind, den ersten Teil der Laufbahn (11A) zu bilden, und axial auf einer Seite des Rohlings des Luftreifens angeordnet sind, wobei das eine oder die mehreren Bänder aus schwach elektrisch leitenden Kautschukmaterialien hergestellt sind,
- ein Band, das dazu bestimmt ist, den Einsatz (10) zu bilden, der in der Weise angeordnet ist, dass wenigstens eine radial innere Windung (100) mit der Unterlage (10) in Kontakt ist, wobei das Band aus einem elektrisch leitenden Kautschukmaterial hergestellt ist,
**dadurch gekennzeichnet, dass** bei der Wicklung des die Unterlage (13) bildenden Bandes lokal eine Steigungsabweichung (130) erzeugt wird, wobei die Steigungsabweichung axial am Ort des radial inneren Teils des Einsatzes (10) angeordnet wird, derart, dass die Windungen nicht aneinander stoßen.

2. Herstellungsverfahren nach Anspruch 1, wobei ein zusätzlicher Schritt ausgeführt wird, der darin besteht, ein oder mehrere Bänder anzuordnen, die dazu bestimmt sind, den zweiten Teil der Laufbahn (11B) zu bilden, und axial auf der anderen Seite des Einsatzes (10) angeordnet sind, wobei das eine oder die mehreren Bänder aus schwach elektrisch leitenden Kautschukmaterialien hergestellt sind.

3. Herstellungsverfahren nach einem der Ansprüche 1 oder 2, wobei die Strecke wischen den Rändern von zwei aufeinander folgenden Windungen, die die Unterlage (13) bilden, auf Höhe der Steigungsabweichung (130) lokal größer als die halbe Breite des Bandes ist.

4. Herstellungsverfahren nach einem der Ansprüche 1 bis 3, wobei die Strecke zwischen den Rändern von zwei aufeinander folgenden Windungen, die die Unterlage (13) bilden, auf Höhe der Steigungsabweichung (130) lokal kleiner oder gleich der Breite des Bandes ist.
